# EUROPEAN PATENT SPECIFICATION

(11) **EP 0 660 296 B1**
(45) Date of publication and mention of the grant of the patent: **18.11.1998**
(21) Application number: 94120675.7
(22) Date of filing: 27.12.1994
(51) Int. Cl.: G09G 3/36

(54) **Data driver generating two sets of sampling signals for sequential-sampling mode and simultaneous-sampling mode**
Daten-Treiber zur Erzeugung zweier Sätze von Samplingsignalen für serielles Sampling und für simultanes Sampling
Dispositif d'entraînement de données pour générer deux séries de signaux d'essais pour essais sériellement et pour essais simultanément

(30) Priority: 27.12.1993 JP 331705/93
(43) Date of publication of application: 28.06.1995
(73) Proprietor: NEC CORPORATION, Tokyo (JP)
(72) Inventor: Kitamura, Kentaro, c/o NEC Corporation, Minato-ku, Tokyo (JP)
(74) Representative: Baronetzky, Klaus, Dipl.-Ing.

(56) References cited:
- EP-A- 0 319 661
- EP-A- 0 350 027

## Description

### BACKGROUND OF THE INVENTION

### Field of the Invention

The present invention generally relates to a data driver for a matrix display device. More specifically, the present invention is directed to a data driver for a matrix display device, which is applicable to any of the sequential-sampling method and the simultaneous-sampling method.

### Description of the Prior Art

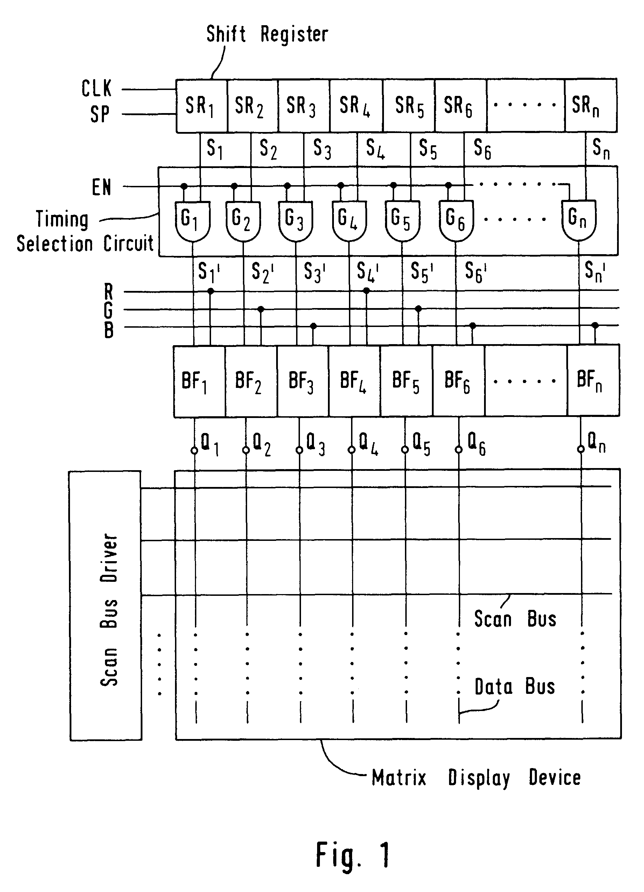

A data driver for a matrix display device in which a data bus is positioned perpendicular to a scan bus is employed so as to apply a data voltage to this matrix display device. As shown in Fig. 1, the conventional data driver applicable to any of the sequential-sampling method and the simultaneous-sampling method is arranged by a shift register consisting of a plurality of shift stages SR₁ to SRₙ for sequentially shifting an entered sampling start pulse SP in response to the clock signal CLK, thereby outputting the sampling signals S₁ to Sₙ in sequence. Further, this conventional data driver includes a plurality of sample/hold circuits BF₁ to BFₙ each sampling an associated one of display data signals R, G, B and outputting the sampled data signal voltage to an associated one of data buses Q₁ to Qₙ. A timing selecting circuit is further provided which includes AND gates G₁ to Gₙ entering the sampling signals S₁ to Sₙ from the shift registers SR₁ to SRₙ under the control of a control signal EN and outputting the sampling signals S₁' to Sₙ' to the sample/hold circuits BF₁ to BFₙ, respectively. This data driver is disclosed in, Japanese Laid-open Patent Application No. Hei 2-74990.

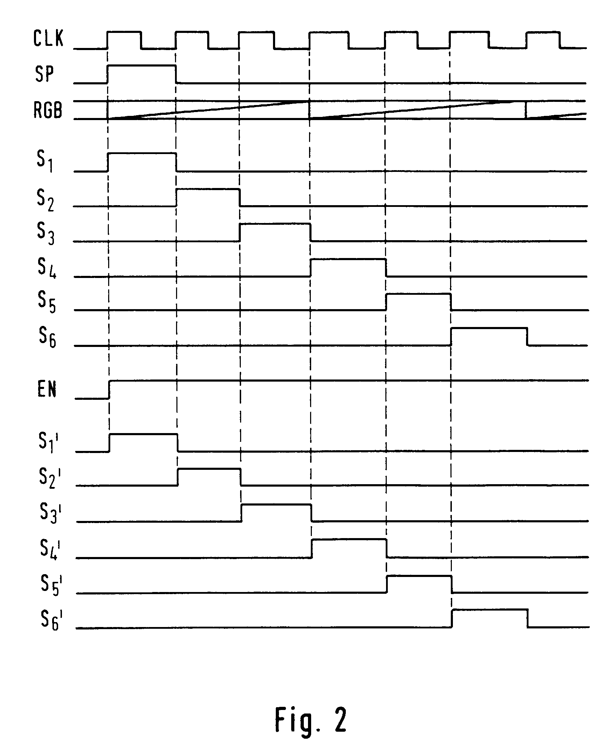

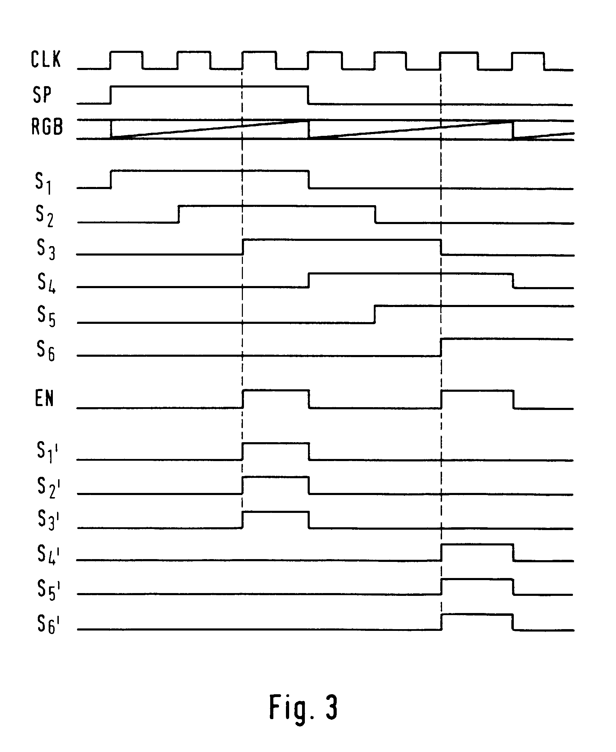

Operations of the conventional data driver will now be explained below with reference also to Fig. 2 and Fig. 3 which are timing charts in the sequential-sampling method and simultaneous-sampling method, respectively.

In the sequential-sampling method as shown in Fig. 2, when both the control signal EN and the sampling pulse SP are inputted, the sampling pulse SP causes the shift stages SR₁ to SRₙ to shift an active high level or H-level in sequence in response to the clock signal CLK, so that the sampling signals S₁ to Sₙ are outputted in sequence from the shift stages SR₁ to SRₙ, respectively. These sampling signals S₁ to Sₙ are then entered into the logic gates G₁ to Gₙ. At this time, since the control signal EN is at the H-level, the sampling signals S₁ to Sₙ are directly transferred to the sample and hold circuits BF₁ to BFₙ with this timing as the signal S₁' to Sₙ', respectively. At the timings of these sampling signals S₁' to Sₙ', the display data signals R, G, B are sequentially sampled, so that then the sampled display data signals are supplied to the data buses Q₁ to Qₙ.

In the simultaneous-sampling method as shown in Fig. 3 on the other hand, the control pulse signal EN having a certain time period is inputted and the sampling start pulse signal SP having the pulse width equal to three time periods as large as the clock signal CLK is inputted. Accordingly, the sampling signals S₁ to Sₙ having the pulse width equal to three time periods of the clock signal CLK are outputted from the shift stages SR₁ to SRₙ, respectively Although these signals are supplied to the logic gates G₁ to Gₙ of the timing selecting circuit, the control pulse signal EN causes three signals of the sampling signals S₁' to Sₙ' to be simultaneously outputted. Thus, the outputted three sampling signals S₁', S₂' and S₃'; S₄' S₅' and S₆' and so on are transferred to the corresponding three ones of the sample/hole circuits BF₁ to BFₙ, so that three sets of the display data signals R, G and B are simultaneously sampled and thus transferred to the data buses Q₁ to Qₙ.

As described above, this conventional data driver is applicable to both the sequential-sampling method and the simultaneous-sampling method. However, in order to realize both applications, the pulse width of the sampling start pulse SP is required to be varied and the control pulse signal EN in synchronism with the clock signal CLK is also required to be changed. This means that the external peripheral circuits for producing these signals SP and EN are made complicated. Moreover, when the synchronization between the control signal EN and the clock signal CLK is shifted during the simultaneous sampling method, the widths of three sampling signal outputted from the timing selecting circuit are fluctuated. There are some possibilities that four sets of the sampling signals are outputted at the same time. The display data signal cannot be thereby correctly sampled.

### SUMMARY OF THE INVENTION

It is therefore an object of the present invention to provide an improved driver circuit.

Another object of the present invention is to provide such a data driver for a matrix display device in which switching in mode between a sequential-sampling operation and a simultaneous-sampling operation is carried out without complicated peripheral circuits.

A driver according to the present invention includes a shift register circuit for sequentially shifting a sampling start pulse in response to a clock signal to thereby produce a plurality of first sampling signals the shift register circuit (SR) comprising a plurality of shift registers (SR₁-SR_{N}) each responsive to said clock signal, a plurality of sample/hole circuits each sampling display data in response to a second sampling signal supplied thereto and supplying the sampled data to a display device, and a switching circuit coupled between the shift register circuit and the sample/hold circuits and supplied with a control signal, said switching circuit transferring the sampling signals from the shift register circuit to the sample/hold circuits as said second sampling signal when said control signal is maintained at a first logic level, respectively, in a sequential-sampling mode and transferring when said control signal is maintained at a second logic level selected ones of the first sampling signals from the shift registers circuit to the sample/hole circuits such that each of the selected first sampling signals is transferred in common to two or more of the sample/hold circuits as the second sampling signals in a simultaneous-sampling mode.

### BRIEF DESCRIPTION OF THE DRAWINGS

The above and other objects, features and advantages of the present invention will be more apparent from the detailed description of the invention in conjunction with the accompanying drawings; in which:
Fig. 1 is a schematic block diagram for showing the arrangement of a conventional data driver for a matrix display device;
Figs. 2 and 3 are timing charts for indicating operations of the data driver shown in Fig. 1;
Fig. 4 is a schematic circuit diagram of a data driver for a matrix display device according to a first embodiment of the present invention;
Fig. 5 is a schematic circuit diagram of a data driver for a matrix display device according to a second embodiment of the present invention;
Fig. 6 is a timing chart for showing the operation of the circuit shown in Fig. 4 in a sequential-sampling method;
Fig. 7 is a timing chart for indicating the operation of the circuit shown in Fig. 4 in a simultaneous-sampling method; and
Fig. 8 is a timing chart for representing the operation of the circuit shown in Fig. 5 in the simultaneous-sampling method.

### DETAILED DESCRIPTION OF THE PREFERRED EMBODIMENTS

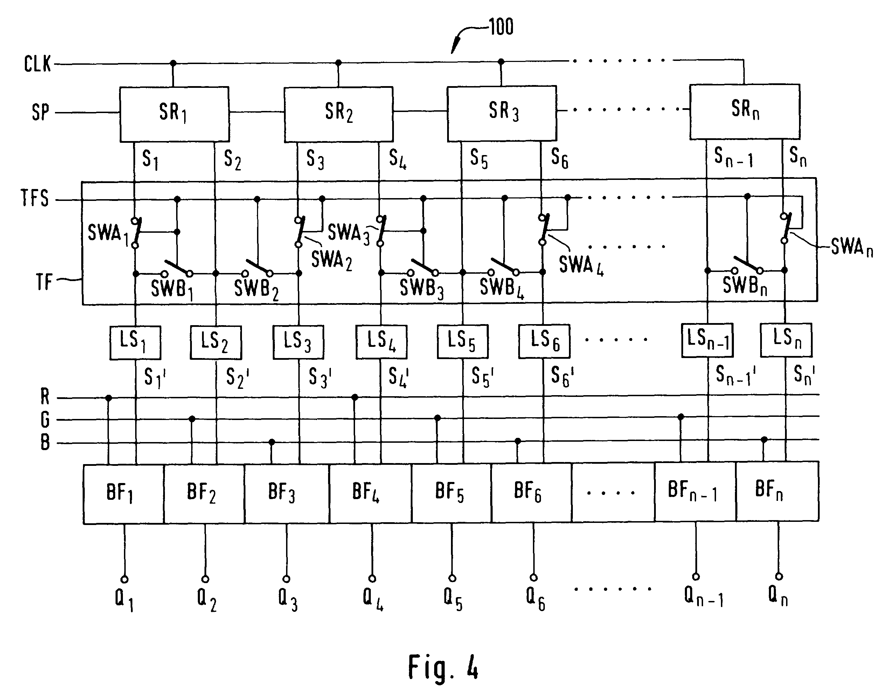

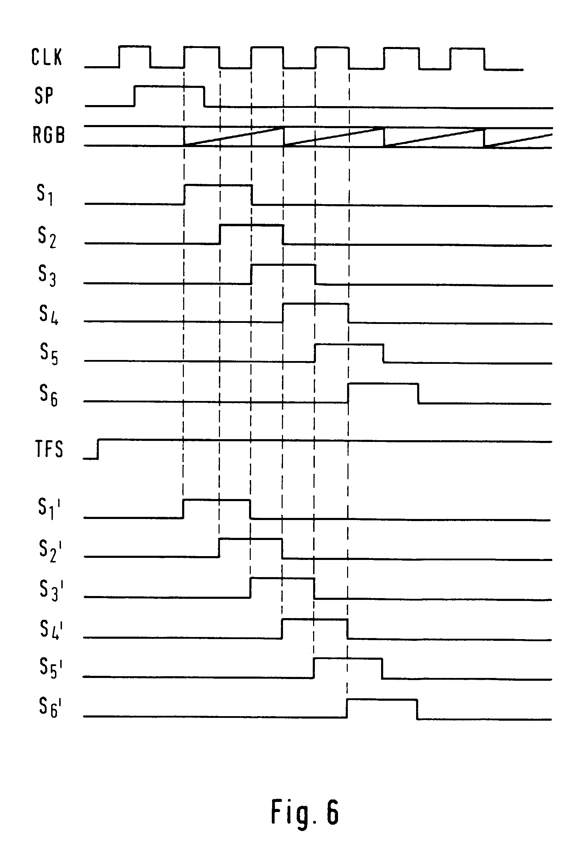

Referring now to Fig. 4, a data driver 100 for a matrix display device according to the first embodiment of the present invention includes n stages of shift registers SR₁ to SRₙ for sequentially shifting a sampling start pulse SP in response to a clock signal CLK. Each of the shift registers outputs associated two of sampling signals S₁ to Sₙ with a relationship thereamong as shown in Fig. 6. For example, the shift register SR₁ responds to the active high level of the sampling start pulse SR and generates the sampling signal S₁ in synchronous with the leading edge of the lock signal CLK and further generates the sampling signal S₂ in synchronism with the trailing edge thereof. The driver 100 further includes n stages of sample/hole circuits BF₁ to BFₙ each sampling an associated one of display data signals R, G and B under the control of an associated one of sampling control signals S₁' to Sₙ' and outputting the sampled data signal voltage to the corresponding one of data buses Q₁ to Qₙ.

Further included in this data driver 100 is a sampling switching circuit TF which receives the sampling signals S₁ to Sₙ outputted from the shift registers SR₁ to SRₙ and a sampling switching signal TFS and outputs the sampling control signals S₁' to Sₙ', through level shift circuits LS₁ to LSₙ. These level shift circuits LS₁ to LSₙ shift in level the sampling signals S₁ to Sₙ to produce the sampling control signals S₁' to Sₙ' having a level suitable for driving the sample/hole circuits BF₁ to BFₙ.

The sampling switching circuit provided in accordance with the present invention includes a plurality of analog switches SWA₁ to SWAₙ and SWB₁ to SWBₙ which are arranged as shown in the drawing, and each of which consists, although not shown, of a p-channel MOS transistor and an n-channel MOS transistor connected in parallel to each other. If desired, each of the switch circuits SW can be composed of a transfer gate consisting of a single MOS transistor. Each of the switch circuits ASWA₁ to SWAₙ and BSWB₁ to SWBₙ is rendered conductive and non-conductive in accordance with the logic level of the sampling switching signal TFS. In this embodiment, the H-level (high level) of the sampling switching signal TFS designates the sequential-sampling method and thus turns the switch circuits SWA₁ to SWAₙ ON and the switch circuits SWB₁ to SWBₙ OFF. Accordingly, as shown in Fig. 6, the sampling signals S₁ to Sₙ outputted from the shift registers SR₁ to SRₙ passes through the sampling switching circuit TF as they are, and are then transferred via the level shift circuits LS₁ to LSₙ to the sample/hold circuits BS₁ to BFₙ as sampling signals S₁' to Sₙ' while keeping the present timings, respectively. As a result, the sample/hole circuits BF₁ to BFₙ sequentially sample display data signals R, G and B in response to the corresponding timings designated by the sampling signals S₁' to Sₙ', respectively. The display data signals thus sampled are then supplied to the data buses Q₁ to Qₙ. The sequential-sampling operation is thus performed.

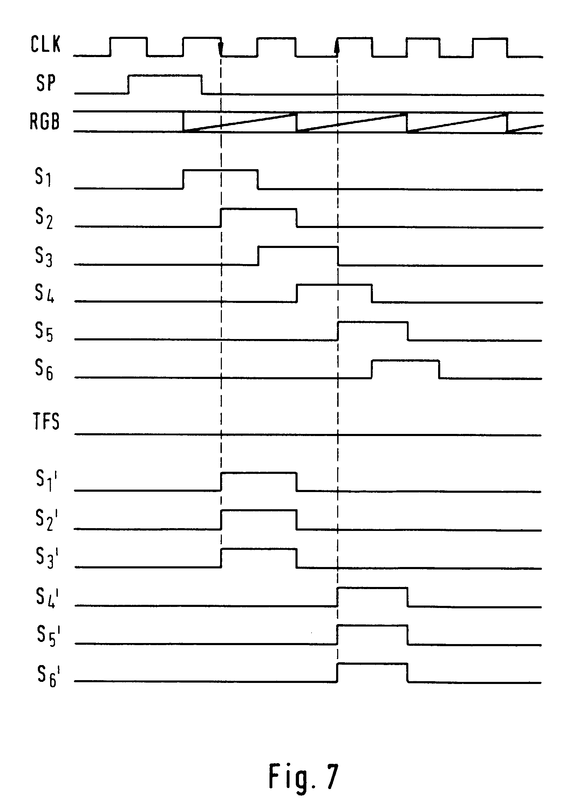

On the other hand, when the simultaneous-sampling method is designated, the sampling switching signal TFS is changed to be the L-level (low level). The switch circuits ASWA₁ to ASWAₙ are thereby turned OFF, whereas the switch circuits BSWB₁ to BWBₙ are turned ON. As a consequence, as shown in Fig. 7, although the same sampling signals S₁ to Sₙ as those of Fig. 6 are derived from the shift registers SR₁ to SRₙ, sequential three ones of the sampling signals S₁' to Sₙ' are simultaneously outputted from the switching circuit TF at the same timings as those of the sampling signals S₂, S₅, S₈, ---, S₃ₙ₋₁, respectively. The three ones of the sampling signals S₁' to Sₙ' thus output simultaneously are then transferred via the level shift circuits LS₁ to LSₙ to the corresponding three ones of the sample/hold circuits BF₁ to BFₙ. The three sets of the display data signals R, G, B are thereby sampled at the same time and then outputted to the corresponding ones of the data buses Q₁ to Qₙ.

In such a manner as described above, one of the sequential-sampling and simultaneous-sampling method is designated only by the level of the signal TFS. Moreover, this signal TFS is free from being synchronized with the clock signal CLK, and no change or control in level and is required to the signals SP and EN (Fig. 1). Accordingly, it is possible to realize the data driver for the matrix display device, capable of switching the sampling signals S₁ to Sₙ outputted from the shift registers SR₁ to SRₙ and of being applied to any of the sequential-sampling method and the simultaneous-sampling method.

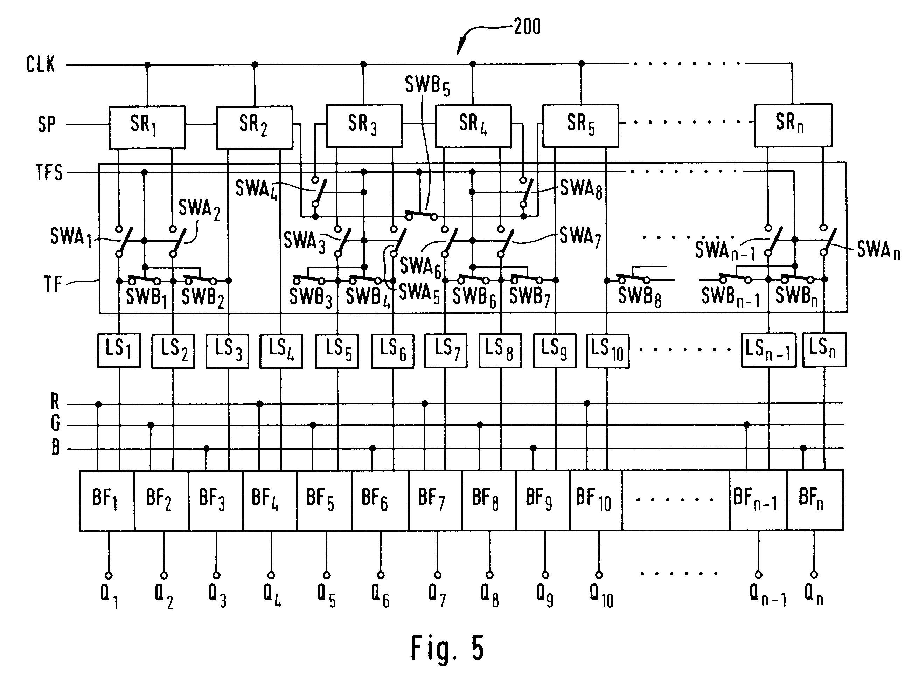

Turning to Fig. 5, a data driver 200 according to the second embodiment of the present invention is constructed by employing such a sampling switching circuit TF that when a sampling switching signal TFS not synchronized with the clock signal CLK is inputted into this sampling switching circuit TF, the sampling signals S₁ to Sₙ derived from the shift registers SR₁ to SRₙ and the sampling start pulse SP derived from the shift registers SR₂, SR₄, SR₆, ---, SR₂ₙ are switched. Accordingly, the sampling method of this data driver can be switched to either the sequential-sampling method or the simultaneous-sampling method.

When the sampling switching signal TFS takes the H-level to designate the sequential-sampling method, the switch circuits SWA₁ to SWAₙ are turned ON, whereas the switch circuits SWB₁ to SWBₙ are turned OFF. Therefore, the sampling signals S₁' to Sₙ' are generated in sequence, similarly to that of the first embodiment as represented in the timing chart of Fig. 6.

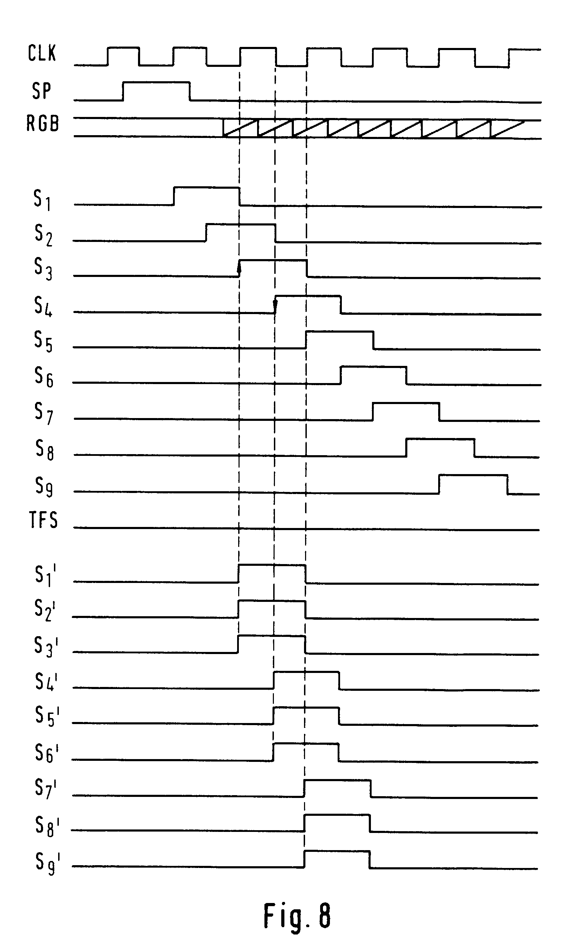

On the other hand, when the sampling switching signal TSF with the L-level is entered into the sampling switching circuit TF, both the sampling signals S₁ to Sₙ outputted from the shift registers SR₁ to SRₙ and the sampling start pulse signal SP are switched, and the sampling signals S₁' to Sₙ' as indicated in Fig. 8 are transferred via the level shift circuits LS₁ to LSₙ to the sample/hole circuits BF₁ to BFₙ. The simultaneous-sampling method is thus performed with the sampling speed that is three times as high as that of the first embodiment.

Since the sampling switching signal TFS with the H-level, or the L-level, which is not synchronized with the clock signal CLK, is supplied to the sampling switching circuit TF, both the sampling signals S₁ to Sₙ derived from the shift registers SR₁ to SRₙ and the sampling start pulse SP are switched in a similar manner to that of the first embodiment. As a consequence, it is also possible to realize the data driver for the matrix display device applicable to any of the sequential-sampling method and the simultaneous-sampling method.

As previously explained in detailed, according to the present invention, the data driver for the matrix-display device is provided with such a sampling switching circuit capable of switching both of the sampling signals derived from the shift registers and the sampling start pulse signal by inputting into this sampling switching circuit, the sampling switching signal with either the H-level or the L-level, which is not synchronized with the clock signal. As a consequence, there are such advantages that the sampling timing of the sample/hole circuit can be quickly and stably switched into any sampling timing of the sequential sampling method and the simultaneous sampling method without varying the pulse width of the sampling start pulse signal to be supplied to the shift register, and without supplying the independent control pulse signal synchronized with the clock signal to the sampling switching circuit.

It is apparent that the present invention is not limited to the above embodiments but may be modified and changed without departing from the scope of the invention as defined in the claims. For example, the level shift circuits LS₁ to LSₙ may be omitted if the sampling signals derived from the switching circuit TF has a level sufficient to drive the sample/hold circuits BF₁ to BFₙ.

## Claims

1. A data driver for sampling display data and supplying sampled display data (R,G,B) to a display device, comprising:
a shift register circuit (SR) for sequentially shifting a sampling start pulse (SP) in response to a clock signal (CLK) to thereby produce a plurality of first sampling signals (S1, ···, Sn) in sequence;
a plurality of sample/hold circuits (BF1, ···, BFn) each responding to an associated one of second sampling signals (S1', ···, Sn') to sample said display data (R,G,B) and supply sampled display data (Q1, ···, Qn) to said display device; and
characterized in that:
the shift register circuit (SR) comprises a plurality of shift registers (SR₁-SR_{N}) each responsive to said clock signal (CLK); and
in that said data driver (100) further comprises:
a switching circuit (TF) coupled between said shift register circuit (SR) and said sample/hold circuits (BF1, ···, BFn) and supplied with a control signal (TFS), said switching circuit (TF) transferring, when said control signal (TFS) is maintained at a first logic level (HIGH), said first sampling signals (S1, ···, Sn) to said sample/hold circuits (BF 1, ···, BFn) as said second sampling signals (S1', ···, Sn'), respectively, and transferring, when said control signal (TFS) is maintained at a second logic level (LOW), selected ones of said first sampling signals (S1, ···, Sn) such that each of said selected ones of said first sampling signals (S1, ···, Sn) is transferred in common to associated two or more of said sample/hold circuits (BF 1, ···, BFn), as the second sampling signals (S1', ···, Sn') thereof.

2. The data driver as claimed in claim 1, characterized in that said switching circuit (TF) includes a plurality of level shift circuits (LS1, ···, LSn) each converting a level of one of said first sampling signals (S1, ···, Sn) supplied thereto and producing a corresponding one of said second sampling signals (S1', ···, Sn').

3. The data driver as claimed in claim 1 or claim 2, characterized in that said switching circuit includes a plurality of analog switches (SWA1, ···, SWAn; SWB1, ···, SWBn) each formed of a P-channel MOS transistor and an N-channel MOS transistor.

4. The data driver as claimed in claim 1 or claim 2, characterized in that said switching circuit includes a plurality of switching circuits (SWA1, ···, SWAn; SWB1, ···, SWBn) each formed of a transfer gate.

5. The data driver as claimed in one of the preceding claims, characterized in that said switching circuit (TF) including a plurality of sampling signal input terminals supplied respectively with said plurality of first sampling signals (S1, ···, Sn), a plurality of sampling signal output terminals and a plurality of switches (SWA1, ···, SWAn; SWB1, ···, SWBn) arranged such that first ones of said switches (SWA1, ···, SWAn) are turned ON and second ones of said switches (SWB1, ···, SWBn) are turned OFF when said control signal (TFS) takes said first logic level (HIGH) to cause said first sampling signals (S1, ···, Sn) to appear at said sampling signal output terminals as said second sampling signals (S1', ···, Sn'), respectively, and that third ones of said switches (SWB1, ···, SWBn) are turned ON and fourth ones of said switches (SWA1, ···, SWAn) are turned OFF when said control signal (TFS) takes said second logic level (LOW) to cause at least one of said first sampling signals (S1, ···, ···, Sn) to appear in common at two or more ones of said sampling output terminals as said second sampling signals (S1', ···, Sn').

6. The data driver as claimed in claim 5, characterized in that said plurality of switches (SWA1, ···, ···, SWAn; SWB1, ···, SWBn) includes a plurality of first switches (SWA1, ···, ···, SWAn) each connected between a selected one of said first sampling signal input terminals and an associated one of said sampling signal output terminals and a plurality of second switches (SWB1, ···, SWBn) each connected between adjacent ones of said sampling signal output terminals.

## Patentansprüche

1. Ein Datentreiber zum Abtasten von Anzeigedaten und Zuführen der abgetasteten Anzeigedaten (R, G, B) zu einer Anzeigevorrichtung, der folgendes aufweist:
einen Schieberegister-Schaltkreis (SR) zum sequentiellen Verschieben eines Abtast-Startimpulses (SP) ansprechend auf ein Taktsignal (CLK), um dadurch eine Vielzahl von ersten Abtastsignalen (S1, ..., Sn) aufeinanderfolgend zu erzeugen;
eine Vielzahl von Abtast/Halte-Schaltkreisen (BF1, ..., BFn) von denen jeder auf ein zugehöriges der zweiten Abtastsignale (S1', ..., Sn') anspricht, um die Anzeigedaten (R, G, B) abzutasten und abgetastete Anzeigedaten (Q1, ..., Qn') der Anzeigevorrichtung zuzuführen; und
dadurch **gekennzeichnet**, daß der Schieberegister-Schaltkreis (SR) eine Vielzahl von Schieberegistern (SR₁-SRₙ) aufweist, von denen jeder auf das Taktsignal (CLK) anspricht; und
daß der Datentreiber (100) weiterhin folgendes aufweist:
einen Schalt-Schaltkreis (TF), der zwischen dem Schieberegister-Schaltkreis (SR) und den Abtast/Halte-Schaltkreisen (BF1, ..., BFn) angeschlossen ist und dem ein Steuersignal (TFS) zugeführt wird, wobei der Schalt-Schaltkreis (TF), wenn das Steuersignal (TFS) auf einem ersten logischen Pegel (HOCH) gehalten wird, die ersten Abtastsignale (S1, ..., Sn) als die jeweiligen zweiten Abtastsignale (S1', ..., Sn') auf die Abtast/Halte-Schaltkreise (BF1, ..., BFn) überträgt, und, wenn das Steuersignal (TFS) auf einem zweiten logischen Pegel (NIEDRIG) gehalten wird, ausgewählte erste Abtastsignale (S1, ..., Sn) überträgt, so daß jedes der ausgewählten ersten Abtastsignale (S1, ..., Sn) als die zweiten Abtastsignale (S1', ..., Sn') dieser gemeinsam auf zugehörige zwei oder mehr der Abtast/Halte-Schaltkreise (BF1, ..., BFn) übertragen wird.

2. Datentreiber nach Anspruch 1, dadurch gekennzeichnet, daß der Schalt-Schaltkreis (TF) eine Vielzahl von Pegel-Schiebeschaltkreisen (LS1, ..., LSn) aufweist, von denen jeder einen Pegel von einem der ersten Abtastsignale (S1, ..., Sn), die diesem zugeführt werden, umwandelt und ein entsprechendes zweites Abtastsignal (S1', ..., Sn') erzeugt.

3. Datentreiber nach Anspruch 1 oder 2, dadurch gekennzeichnet, daß der Schalt-Schaltkreis eine Vielzahl von analogen Schaltern (SWA1, ..., SWAn; SWB1, ..., SWBn) aufweist, von denen jeder aus einem P-Kanal-MOS-Transistor und einem N-Kanal-MOS-Transistor ausgebildet ist.

4. Datentreiber nach Anspruch 1 oder 2, dadurch gekennzeichnet, daß der Schalt-Schaltkreis eine Vielzahl von Schalt-Schaltkreisen (SWA1, ..., SWAn; SWB1, ..., SWBn) aufweist, von denen jeder aus einem Übertragungsgate ausgebildet ist.

5. Datentreiber nach einem der vorhergehenden Ansprüche, dadurch gekennzeichnet, daß der Schalt-Schaltkreis (TF) eine Vielzahl von Abtastsignal-Eingangsanschlüssen, denen jeweils die Vielzahl von ersten Abtastsignalen (S1, ..., Sn) zugeführt wird, eine Vielzahl von Abtast-Ausgangsanschlüssen und eine Vielzahl von Schaltern (SWA1, ···, ..., SWAn; SWB1, ..., SWBn) aufweist, die so angeordnet sind, daß die ersten der Schalter (SWA1, ..., SWAn) EINgeschaltet werden und die zweiten der Schalter (SWB1, ..., SWBn) AUSgeschaltet werden, wenn das Steuersignal (TFS) den ersten logischen Pegel (HOCH) einnimmt, um zu bewirken, daß die ersten Abtastsignale (S1, ..., Sn) als die jeweiligen zweiten Abtastsignale (S1', ..., Sn') an den Abtastsignal-Ausgangsanschlüssen erscheinen, und daß dritte der Schalter (SWB1, ..., SWBn) EINgeschaltet werden und vierte der Schalter (SWA1, ..., SWAn) AUSgeschaltet werden, wenn das Steuersignal (TFS) den zweiten logischen Pegel (NIEDRIG) einnimmt, um zu bewirken, daß mindestens eines der ersten Abtastsignale (S1, ..., Sn) als das zweite Abtastsignal (S1', ..., Sn') gemeinsam an zwei oder mehr der Abtast-Ausgangsanschlüsse erscheint.

6. Datentreiber nach Anspruch 5, dadurch gekennzeichnet, daß die Vielzahl von Schaltern (SWA1, ..., SWAn; SWB1, ..., SWBn) eine Vielzahl von ersten Schaltern (SWA1, ..., SWAn), von denen jeder zwischen einem ausgewählten der ersten Abtastsignal-Eingangsanschlüsse und einem zugehörigen der Abtastsignal-Ausgangsanschlüsse angeschlossen ist, und eine Vielzahl von zweiten Schaltern (SWB1, ..., SWBn) aufweist, von denen jeder zwischen benachbarten Abtastsignal-Ausgangsanschlüssen angeschlossen ist.

## Revendications

1. Dispositif de gestion de données destiné à échantillonner des données d'affichage et à délivrer les données d'affichage échantillonnées (R, G, B) à un dispositif d'affichage, comportant :
un circuit à registres de décalage (SR) destiné à décaler séquentiellement une impulsion de début d'échantillonnage (SP) en réponse à un signal d'horloge (CLK) pour produire ainsi une pluralité de premiers signaux d'échantillonnage (S1, ..., Sn) en séquence ;
une pluralité de circuits d'échantillonnage/maintien (BF1, ..., BFn) répondant chacun à un signal associé parmi des seconds signaux d'échantillonnage (S1', ..., Sn') pour échantillonner lesdites données d'affichage (R, G, B) et délivrer des données d'affichage échantillonnées (Q1, ..., Qn) audit dispositif d'affichage ; et
caractérisé en ce que le circuit à registres de décalage (SR) comporte une pluralité de registres de décalage (SR₁-SR_{N}) répondant chacun audit signal d'horloge (CLK) ; et en ce que ledit dispositif de gestion de données (100) comporte en outre :
un circuit de commutation (TF) monté entre ledit circuit à registres de décalage (SR) et lesdits circuits d'échantillonnage/maintien (BF1, ..., BFn) et recevant un signal de commande (TFS), ledit circuit de commutation (TF) transférant, lorsque ledit signal de commande (TFS) est maintenu à un premier niveau logique (HAUT), lesdits premiers signaux d'échantillonnage (S1, ..., Sn) vers lesdits circuits d'échantillonnage/maintien (BF1, ..., BFn) comme seconds signaux d'échantillonnage (S1', ..., Sn'), respectivement, et transférant, lorsque ledit signal de commande (TFS) est maintenu à un second niveau logique (BAS), des signaux sélectionnés parmi lesdits premiers signaux d'échantillonnage (S1, ..., Sn) de telle sorte que chacun desdits signaux sélectionnés parmi lesdits premiers signaux d'échantillonnage (S1, ..., Sn) soit transféré, en commun, sur deux ou plus de deux circuits associés parmi lesdits circuits d'échantillonnage/maintien (BF1, ..., BFn), comme seconds signaux d'échantillonnage (S1', ..., Sn').

2. Dispositif de gestion de données selon la revendication 1, caractérisé en ce que ledit circuit de commutation (TF) comporte une pluralité de circuits de décalage de niveau (LS1, ..., LSn) convertissant chacun un niveau d'un desdits premiers signaux d'échantillonnage (S1, ..., Sn) délivrés sur ceux-ci, et produisant un signal correspondant desdits seconds signaux d'échantillonnage (S1', ..., Sn').

3. Dispositif de gestion de données selon la revendication 1 ou la revendication 2, caractérisé en ce que ledit circuit de commutation comporte une pluralité de commutateurs analogiques (SWA1, ..., SWAn ; SWB1, ..., SWBn) formés chacun d'un transistor MOS à canal P et d'un transistor MOS à canal N.

4. Dispositif de gestion de données selon la revendication 1 ou la revendication 2, caractérisé en ce que ledit circuit de commutation comporte une pluralité de circuits de commutation (SWA1 ..., SWAn ; SWB1, ..., SWBn) formés chacun d'une porte de transfert.

5. Dispositif de gestion de données selon l'une quelconque des revendications précédentes, caractérisé en ce que ledit circuit de commutation (TF) comporte une pluralité de bornes d'entrée de signaux d'échantillonnage sur lesquelles sont appliqués respectivement les signaux de ladite pluralité de premiers signaux d'échantillonnage (S1, ..., Sn), une pluralité de bornes de sortie de signaux d'échantillonnage et une pluralité de commutateurs (SWA1, ..., SWAn ; SWB1, ..., SWBn) agencés de telle sorte que des premiers d'entre lesdits commutateurs (SWA1, ..., SWAn) soient commutés en mode PASSANT et des deuxièmes d'entre lesdits commutateurs (SWB1, ..., SWBn) soient commutés en mode BLOQUE lorsque ledit signal de commande (TFS) adopte ledit premier niveau logique (HAUT) pour amener lesdits premiers signaux d'échantillonnage (S1, ..., Sn) à apparaître au niveau desdites bornes de sortie de signaux d'échantillonnage comme seconds signaux d'échantillonnage (S1', ..., Sn'), respectivement, et de telle sorte que des troisièmes d'entre lesdits commutateurs (SWB1, ..., SWBn) soient commutés en mode PASSANT et des quatrièmes d'entre lesdits commutateurs (SWA1, ..., SWAn) soient commutés en mode BLOQUE lorsque ledit signal de commande (TFS) adopte ledit second niveau logique (BAS) pour amener au moins l'un desdits premiers signaux d'échantillonnage (S1, ..., Sn) à apparaître, en commun, au niveau de deux ou de plus de deux desdites bornes de sortie d'échantillonnage comme seconds signaux d'échantillonnage (S1', ..., Sn').

6. Dispositif de gestion de données selon la revendication 5, caractérisé en ce que ladite pluralité de commutateurs (SWA1, ..., SWAn ; SWB1, ..., SWBn) comporte une pluralité de premiers commutateurs (SWA1, ..., SWAn), montés chacun entre une borne sélectionnée parmi lesdites premières bornes d'entrée de signaux d'échantillonnage et une borne de sortie associée parmi lesdites bornes de sortie de signaux d'échantillonnage, et une pluralité de deuxièmes commutateurs (SWB1, ..., SWBn) montés chacun entre des bornes adjacentes parmi lesdites bornes de sortie de signaux d'échantillonnage.
